# EUROPÄISCHE PATENTANMELDUNG

(11) **EP 0 962 295 A2**
(43) Veröffentlichungstag der Anmeldung: **08.12.1999**
(21) Anmeldenummer: 99109925.0
(22) Anmeldetag: 20.05.1999
(51) Int. Cl.: B29C 45/14, B29C 45/26

(54) **Spritzgusswerkzeug**

(30) Priorität: 30.05.1998 DE 19824463
(71) Anmelder: STEFAN PFAFF WERKZEUG- UND FORMENBAU GmbH & CO. KG, 88167 Röthenbach (DE)
(72) Erfinder: Wagner, Ernst, 88167 Röthenbach (DE)
(74) Vertreter: Riebling, Peter, Dr.-Ing.

(57) **Zusammenfassung**

Die Erfindung betrifft ein Spritzgußwerkzeug welches mindestens zwei Formhälften und/oder Formeinsätze umfaßt, die durch eine von außen wirkende Kraft geschlossen werden können.
Die Erfindung zeichnet sich dadurch aus, daß im Spritzgußwerkzeug oder Teilen davon mindestens ein Hohlraum angeordnet ist, der mittels eines geeigneten Mediums unter Druck gesetzt werden kann, daß mindestens ein Teil der den Hohlraum begrenzenden Wand als flexible Dichtzone ausgebildet ist, über welche der Druck direkt oder indirekt auf die Kontur oder Trennung der Formeinsätze oder auf ein Werkstück übertragen wird.

## Beschreibung

Die Erfindung betrifft ein Spritzgußwerkzeug nach dem Oberbegriff des Patentanspruchs 1.

Bei nahezu allen Teilen, die von Menschen oder Maschinen hergestellt bzw. gefertigt werden, gibt es Maßabweichungen, d.h. Toleranzen. Diese Toleranzen machen große Probleme bei der Weiterverarbeitung von zu umspritzenden Teilen in der Spritzgießtechnik. Es sind bisher einige Techniken bekannt, um diese Toleranzen zu minimieren. Diese Verfahren sind jedoch sehr teuer und in der Praxis kaum zu realisieren.

Desweiteren gibt es bei der Weiterverarbeitung von Elastomeren, Thermo- und Duroplasten im Formenbau immer wieder Schwierigkeiten, austriebslose Trennungen oder Übergänge zum Extrudat zu schaffen, auch in Hinsicht auf Verschleißerscheinungen.

Der Erfindung liegt deshalb die Aufgabe zu Grunde, ein Spritzgußwerkzeug derart weiterzubilden, daß auftretende Toleranzen kostengünstig und in einfacher Weise ausgeglichen bzw. minimiert werden können.

Diese Aufgabe wird durch die kennzeichnenden Merkmale des Patentanspruchs 1 gelöst.

Die Erfindung beruht darauf, daß im Spritzgußwerkzeug oder Teilen davon mindestens ein Hohlraum angeordnet ist, der mittels eines geeigneten Mediums unter Druck gesetzt werden kann, daß mindestens ein Teil der den Hohlraum begrenzenden Wand als flexible Dichtzone ausgebildet ist, über welche der Druck direkt oder indirekt auf eine Kontur oder Trennung der Formeinsätze oder auf ein Werkstück übertragen wird.

Diese Dichtzonen werden durch Herstellen eines speziellen Hohlraumes, der annähernd parallel zur Kontur oder zur Trennung verläuft, erzeugt, wobei die Hohlräume in einer Formhälfte und/oder einem Form- oder Kontureinsatz des Spritzgußwerkzeuges angeordnet sind.

Durch variieren der Wandstärke der flexiblen Dichtzonen läßt sich die Druckverteilung auf einzelne Bereiche der Dichtzonen entsprechend den Anforderungen einstellen. Durch Ausbildung von Schwachstellen oder Sollknickstellen kann auch die Stärke der Ausdehnung der Dichtzone eingestellt werden.

Jeder Hohlraum kann mehrere flexible Dichtzonen aufweisen, was sich vorteilhaft beim Spritzen von aufwendigeren Profilen realisieren läßt.

Vorzugsweise wird der Hohlraum zur 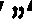 Aktivierung" der flexiblen Dichtzonen jedoch erst unter Druck gesetzt, nachdem die Formhälften des Spritzgußwerkzeuges geschlossen sind. Es ist jedoch auch vorgesehen, den Hohlraum bzw. das darin enthaltene Druckmedium konstant mit einer definierten Vorspannung zu beaufschlagen.

In einer bevorzugten Ausführungsform besteht das Druckmedium aus kugelförmigen Festkörpern, die je nach Einsatz aus Metall-, Glas- oder Keramikkugeln bestehen können. Um einem Verschleiß der dem Hohlraum begrenzenden Flächen vorzubeugen, sind diese Flächen zumindest teilweise gehärtet.

In einer alternativen Ausführungsform besteht das Druckmedium aus einem Hydraulikmedium, z.B. Hydrauliköl, welches jedoch für die genannten Einsatzzwecke hoch temperaturfest sein muß.

Der Druckaufbau im Hohlraum erfolgt durch Beaufschlagung des Druckmediums über Hydraulik, manuell über Spindeltriebe oder elektromechanisch.

Der Innendruck des Druckmediums kann über einen Drucksensor gemessen werden. Dies ermöglicht eine Regelung des Innendrucks und eine Anpassung an den jeweiligen Einsatzzweck.

Mit der Erfindung ist insbesondere der Vorteil verbunden, daß ein Verschleiß an Dichtkanten reduziert werden kann, wobei auch Fertigungstoleranzen am Werkzeug ausgeglichen werden können. Ebenso können Toleranzen von Einlegeteilen die umspritzt oder an die etwas angespritzt werden soll, ausgeglichen werden.

Durch die flexiblen Dichtzonen ist insbesondere eine austriebsarme bzw. austriebsfreie Fertigung von Spritzgießteilen möglich. Ebenso ermöglicht die Erfindung einen bedingten Ausgleich von Extrusionstoleranzen (z.B. Eck-Vulkanisationsformen).

Durch Materialwahl und Ausführung der Geometrie der Schwachstellen bzw. Sollknickstellen bzw. der Wandstärke der flexiblen Dichtzonen kann die Kraftverteilung und somit der Dichtbereich beeinflußt werden. Horizontale und vertikale Dichtflächen im Freiformflächenbereich können gleichzeitig gedichtet werden.

Ein weiterer grundlegender Vorteil ist, daß zur Anfertigung des Werkzeuges keine wesentlich höheren Kosten anfallen.

Nachfolgend werden mehrere Ausführungsbeispiele der Erfindung anhand von mehreren Zeichnungsfiguren näher erläutert. Dabei gehen aus den Zeichnungen und ihrer Beschreibung weitere Merkmale und Vorteile der Erfindung hervor.

Es zeigen:
- Figur 1:: Einen Schnitt durch ein Spritzgußwerkzeug;
- Figur 2:: Eine vergrößerte Teilansicht des Spritzgußwerkzeuges gemäß Figur 1 mit Hydraulikflüssigkeit als Druckmedium;
- Figur 3:: Eine Variante der Anordnung gemäß Figur 2 mit kugelförmigen Festkörpern als Druckmedium;
- Figur 4:: Eine weitere Ausführungsform eines Spritzgußwerkzeuges mit mehreren Hohlräumen und Dichtzonen;
- Figur 5:: Ein Mehrfach-Spritzgußwerkzeug mit Kugeln als Druckmedium;
- Figur 6:: Eine weitere Ausführungsform eines Spritzgußwerkzeuges mit Kugeln als Druckmedium und hydraulischer Vorspannung;
- Figur 7:: Eine Ausführungsform eines Spritzgußwerkzeuges mit Kugeln als Druckmedium und Vorspannung durch Federkraft;
- Figur 8:: Eine weitere Ausführungsform eines Spritzgußwerkzeuges mit mehreren Hohlräumen und Dichtzonen;
- Figur 9:: Eine weitere Ausführungsform eines Spritzgußwerkzeuges mit kugelförmigen Festkörpern als Druckmedium;
- Figur 10:: Beispiel der Ausführung eines Einsatzes mit flexibler Dichtzone;
- Figur 11:: Beispiel der Ausführung eines Einsatzes mit flexibler Dichtzone.

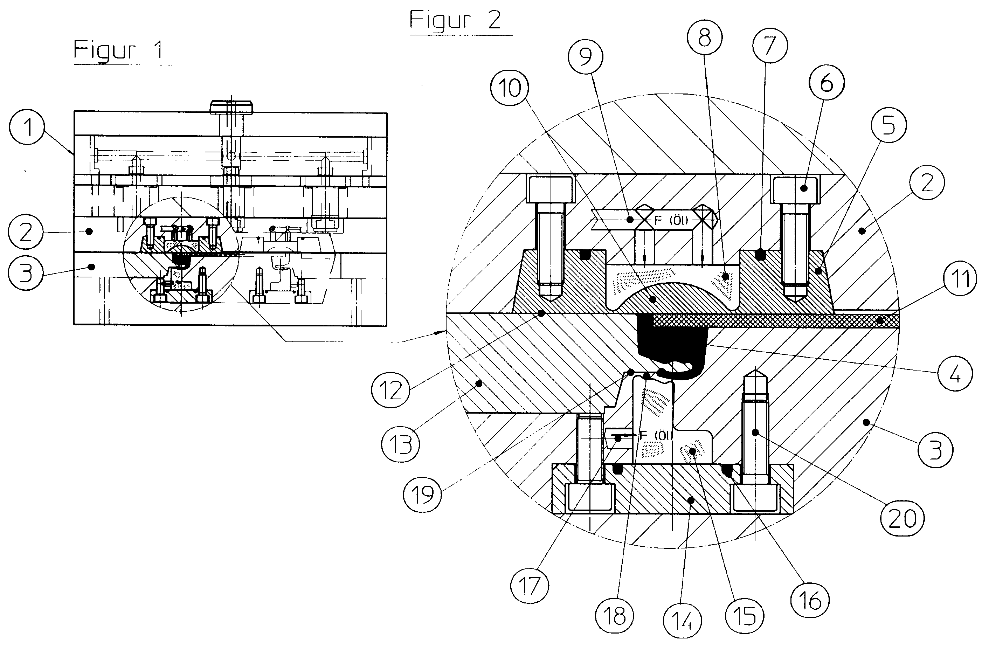

Figur 1 zeigt, teilweise geschnitten, ein erfindungsgemässes Spritzgußwerkzeug. Dieses umfaßt in bekannter Weise eine Oberform 2 sowie eine Unterform 3, welche in geschlossenem Zustand einen Formhohlraum zur Herstellung eines Spritzlings definieren.

Figur 2 zeigt eine vergrößerte Ansicht des Bereiches des Formhohlraumes aus Figur 1. Man erkennt eine obere und eine untere Form 2, 3, die entlang einer Trennebene 12 zusammentreffen. Zwischen den Formhälften 2,3 befindet sich ein Einlegeteil 11, welches z.B. ein Kunststoffteil sein kann. An dieses Kunststoffteil soll ein Spritzling 4 in Form eines Formprofils angespritzt werden. Die Form des Spritzlings wird durch die Unterform 3 sowie einen Einsatz 13 definiert. In der Oberform 2 ist nun erfindungsgemäß ein Einsatz 5 vorgesehen, welcher mittels Schrauben 6 mit der Oberform verbunden ist. Dieser Einsatz 5 definiert zusammen mit der Oberform 2 einen Hohlraum 8, welcher mit Hydraulikflüssigkeit gefüllt werden kann, die über eine Zuleitung 9 eingespeist wird. Zur Abdichtung des Hohlraumes 8 sind Dichtungen 7 zwischen Oberform 2 und Einsatz 5 vorgesehen.

In der Unterform 3 ist ebenfalls ein Hohlraum 15 angeordnet, welcher durch einen Einsatz 14 verschlossen wird, der mittels Schrauben 20 mit der Unterform verbunden ist. Auch hier sind Dichtungen 16 vorgesehen. Dieser Hohlraum kann über eine Zuleitung 17 mit Hydraulikflüssigkeit beaufschlagt werden.

Ist nun das Werkstück 11 eingelegt und sind die Formhälften 2, 3, geschlossen, werden erfindungsgemäß die Hohlräume 8 und 15 mit Druck beaufschlagt. Dabei weist der Hohlraum 8 eine flexible Dichtzone 10 auf, die direkt am Werkstück 11 bzw. dem Einsatz 13 anliegt und auch den Formhohlraum teilweise abschließt. Durch den Druckaufbau im Hohlraum 8 dehnt sich diese flexible Dichtzone in Richtung Werkstück 11 bzw. Einsatz 13 aus und dichtet dadurch die Stoßfugen zwischen Einlegeteil 5, Werkstück 11 und Einsatz 13 ab.

Ebenfalls besitzt der Hohlraum 15 eine flexible Dichtzone 18 welche am Einsatz 13 anliegt. Auch dieser Hohlraum 15 wird mit Druck beaufschlagt, so daß sich die flexible Dichtzone 18 in Richtung Einsatz 13 ausdehnt und die Trennfläche der zwischen Dichtzone 18 und Einsatz 13 aufeinander preßt. Nun kann der Kunststoff eingespritzt werden, wobei nun erfindungsgemäß durch die flexiblen Dichtzonen 10, 18 eine hervorragende Abdichtung erzielt wird, welche ein Austreiben der Spritzmasse entlang der Trennfugen bzw. Trennebenen 12 bzw. 19 erheblich reduziert oder gar ganz verhindert, Weiterhin erlaubt der Einsatz der flexiblen Dichtzonen 10,18 den Ausgleich von Toleranzen des Spritzgußwerkzeuges und eine sichere Klemmung des Werkstückes 11 im Anspritzbereich.

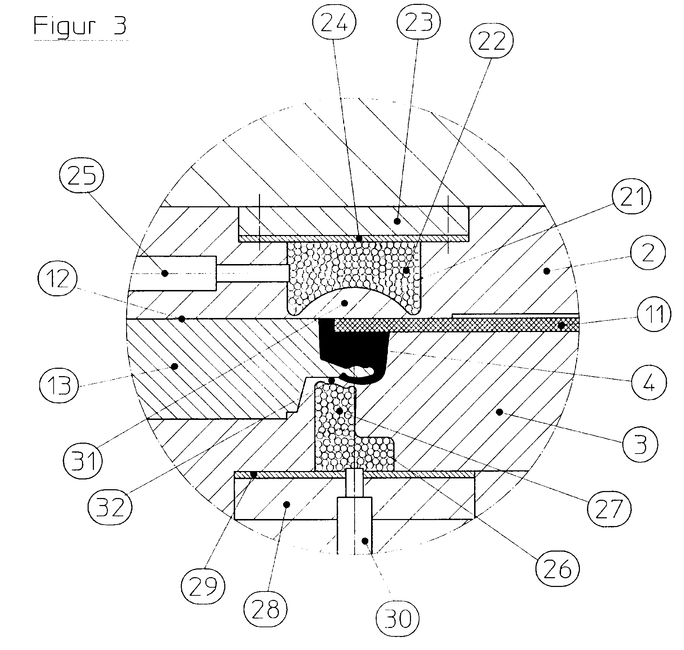

Das in Figur 3 gezeigte Spritzgußwerkzeug entspricht im Aufbau in etwa den Figuren 1 und 2. Im Unterschied zum vorhergehenden Beispiel sind jedoch die Hohlräume 21 und 26 mit kugelförmigen Festkörpern gefüllt, welche das Druckmedium darstellen. Dabei ist Hohlraum 21 mit einer gehärteten Stahlplatte 24 abgedeckt, die von einem Einsatz 23 gehalten wird. Der Hohlraum 27 ist mit einer gehärteten Stahlplatte 29 abgedeckt, an die sich ein Einsatz 28 anschließt. Der Druckaufbau im Medium 22 erfolgt über einen Hydraulikzylinder 25, der Druckaufbau im Druckmedium 27 ebenfalls über einen Hydraulikzylinder 30. Der ausgeübte Druck auf das jeweilige Druckmedium 22, 27 pflanzt sich in gleichartiger Weise auf die flexiblen Dichtzonen 31 und 32 fort, deren Funktion weiter oben bereits genau beschrieben wurde.

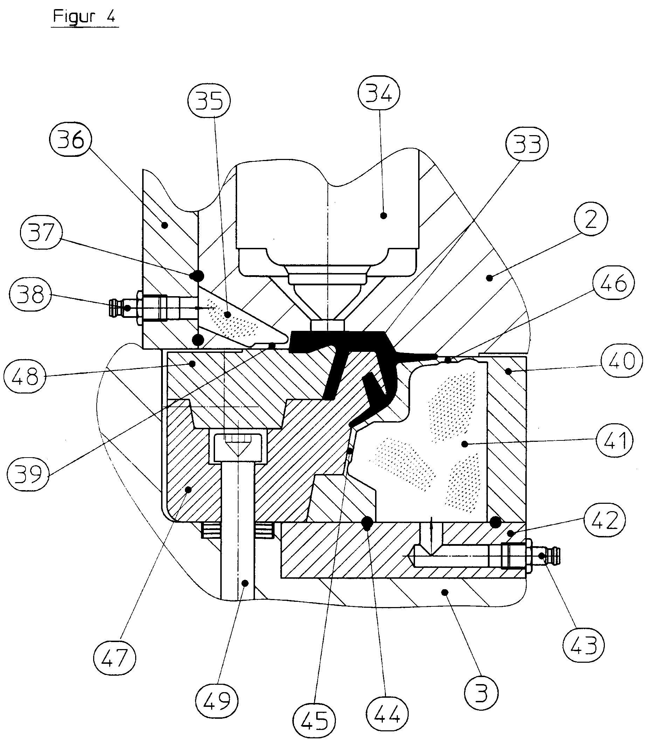

In einem weiteren Ausführungsbeispiel des Spritzgußwerkzeuges gemäß Figur 4 erkennt man wiederum die oberen und unteren Formhälften 2, 3. Die obere Formhälfte 2 beinhaltet die Einspritzdüse 34. Die untere Formhälfte trägt mehrere Einsätze 40, 47 und 48, welche zusammen mit der Oberform den Formhohlraum für den Spritzling 33 definieren. Die Oberform 2 weist einen Hohlraum 35 auf, welcher mit einem Hydraulikmedium gefüllt ist und über eine Zuleitung 38 mit Druck beaufschlagt werden kann. Der Hohlraum 35 ist mittels einer Platte 36 abgedeckt und mit Dichtungen 37 abgedichtet. Angrenzend an den Einsatz 48 weist der Hohlraum 35 eine flexible Dichtzone 39 auf Wird der Hohlraum 35 mit Druck beaufschlagt, dehnt sich die flexible Dichtzone 39 in Richtung 48 aus und dichtet die angrenzende Trennfuge ab. Der Einsatz 40 weist ebenfalls einen Hohlraum 41 auf, der über eine Zuleitung 43 mit einem Druckmedium beaufschlagt werden kann. Der Hohlraum 41 ist durch eine Platte 42 abgedeckt und mittels Dichtungen 44 abgedichtet. Dem Hohlraum 41 sind zwei flexible Dichtzonen 45 und 46 zugeordnet, die jeweils den Bereich zur Oberform 2 bzw. zum Einsatz 47 abdichten. In den Einsatz 47 ist ein federbelasteter Presstift 49 eingelassen, welcher die Einsätze 47 und 48 aneinander preßt und so eine Abdichtung der dazwischen liegenden Trennfuge gewährleistet.

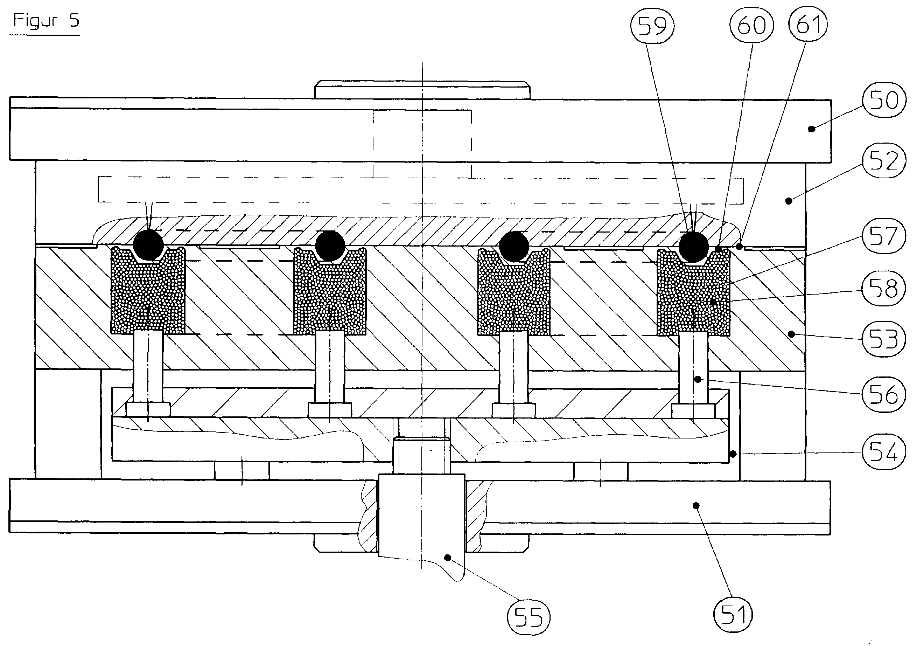

Figur 5 zeigt ein Mehrfachspritzwerkzeug zum Herstellen von O-Ringen 59 oder dgl. Da die Formnester identisch ausgebildet sind, wird nur der rechte Teil der Zeichnungsfigur beschrieben und läßt sich analog auf den linken Teil der Zeichnung übertragen. Man erkennt das Spritzwerkzeug mit einer oberen und unteren Trägerplatte 50, 51 und den dazwischenliegenden Formplatten 52 und 53. Die obere Formplatte 52 enthält in bekannter Weise die Einspritzeinheit. In geschlossenem Zustand bildet sich zwischen den Formplatten 52, 53 eine Trennebene 61. die untere Formhälfte 53 enthält einen ringförmigen Hohlraum 57, welcher mit kugelförmigen Festkörpern als Druckmedium gefüllt ist. Der Hohlraum erstreckt sich jeweils genau oberhalb der ringförmigen Formnester für die O-Ringe 59. An den jeweils inneren und äußeren Durchmessern der O-Ringe 59 schließt sich im Bereich der Trennebene jeweils eine ringförmige flexible Dichtzone 60 an. Die untere Trägerplatte 51 umfaßt eine Auswerfereinheit 54, welche über einen Hydaulikzylinder 55 mit Druck beaufschlagt werden kann. Dieser Druck wird über Presstifte auf das im Hohlraum 57 befindliche Druckmedium 58 übertragen. Bei der dargestellten geschlossenen Stellung des Spritzwerkzeuges wird nun das Medium im Hohlraum 57 mit Druck beaufschlagt, so daß sich die flexiblen Dichtzonen 60 ausdehnen und rings um den Spritzling 59 für eine bestmögliche Abdichtung sorgen.

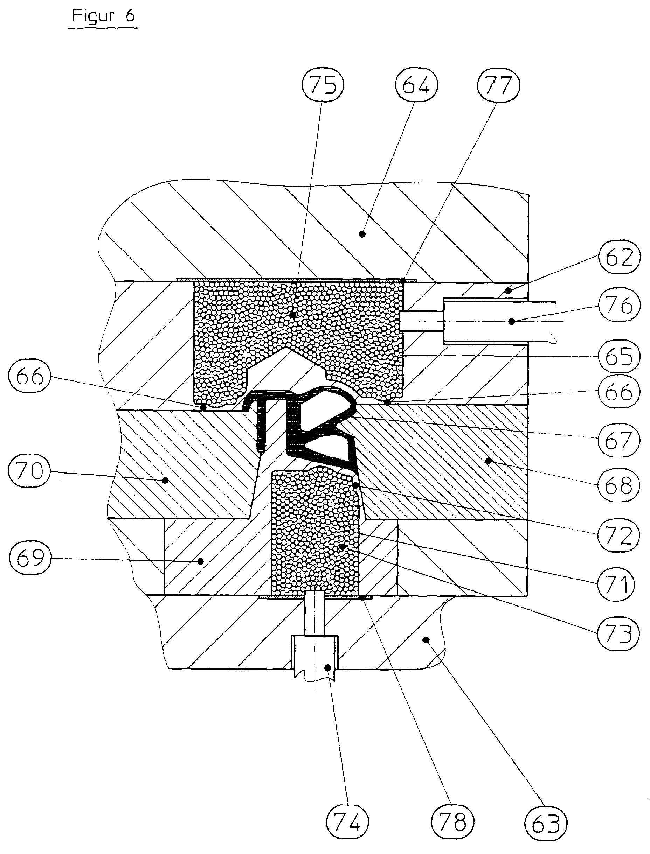

Figur 6 zeigt eine Spritzgußform mit einer Trägerplatte 64 sowie einer Oberform 62 und einer Unterform 63. Es sind mehrere Einsätze 68, 69, 70 vorgesehen, welche den Formhohlraum 67 für den Spritzling definieren. Die Oberform weist einen Hohlraum 65 auf, welcher mit einem Druckmedium aus kugelförmigen Festkörpern 75 gefüllt ist. Mit einem Druckzylinder 76 kann auf diesen kugelförmigen Festkörper 75 Druck ausgeübt werden. Der Hohlraum 65 weist zwei flexible Dichtzonen 56 auf, die an den Einsätzen 68 bzw. 70 angrenzen. Der Einsatz 69 weist ebenfalls einen Hohlraum 71 auf, der mit Kugelkörpern 73 gefüllt ist. Auch hier kann über einen Druckzylinder 64 Druck auf die Kugelkörper ausgeübt werden. Der Hohlraum 71 weist eine flexible Dichtzone 72 auf, die an den Einsatz 68 angrenzt. Die Hohlräume 65 bzw. 71 sind mit einer gehärteten Platte 77 bzw. 78 abgedeckt.

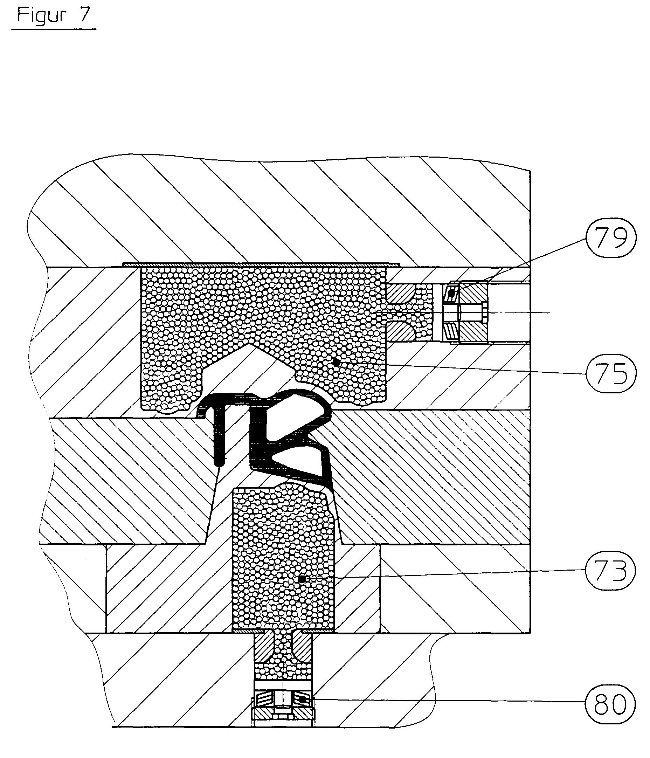

Die Darstellung in Figur 7 entspricht im wesentlichen der Ausführungsform gemäß Figur 6, wobei jedoch hier zur Druckausübung auf die Kugelkörper 73 bzw. 75 kein Druckzylinder verwendet wird, sondern jeweils Federpakete 79,80. welche die notwendige Vorspannung erzeugen. In bekannter Weise kann die Vorspannung der Federpakete z.B. manuell durch eine Einstellschraube eingestellt werden.

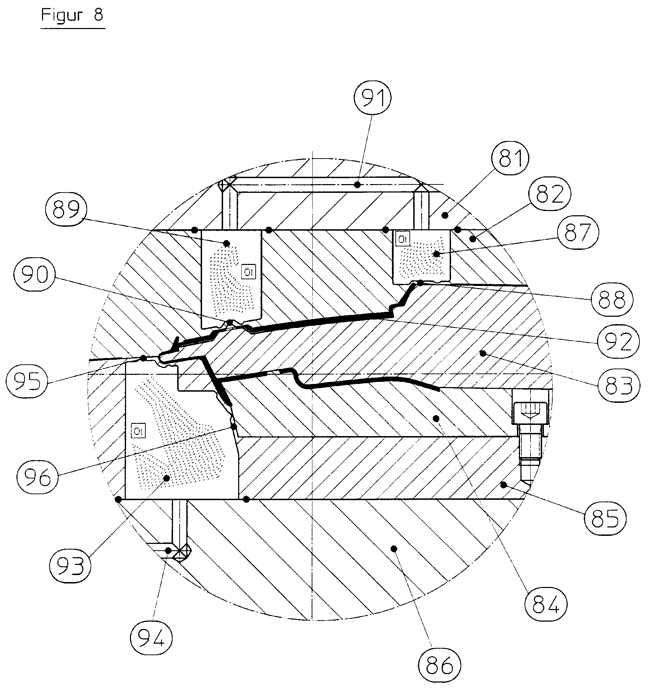

Figur 8 zeigt ein Spritzgußwerkzeug bestehend aus einer oberen und unteren Trägerplatte 81 bzw. 86 und mehreren Einsätzen 82, 83, 84 und 85, welche den Formhohlraum 92 für den Spritzling definieren. In den Einsätzen sind mehrere Hohlräume 87, 89 und 93 vorgesehen, welche jeweils mit einem Druckmedium gefüllt sind, welches über Zuleitungen 91 bzw. 94 eingespeist werden kann. Der Hohlraum 87 weist dabei eine flexible Dichtzone 88 auf, welche an den Einsatz 83 angrenzt. Der Hohlraum 89 weist eine flexible Dichtzone 90 auf, welche ebenfalls an den Einsatz 83 angrenzt. Hohlraum 93 weist zwei flexible Dichtzonen 95 und 96 auf, die an den Einsatz 82 bzw. den Einsatz 84 angrenzen.

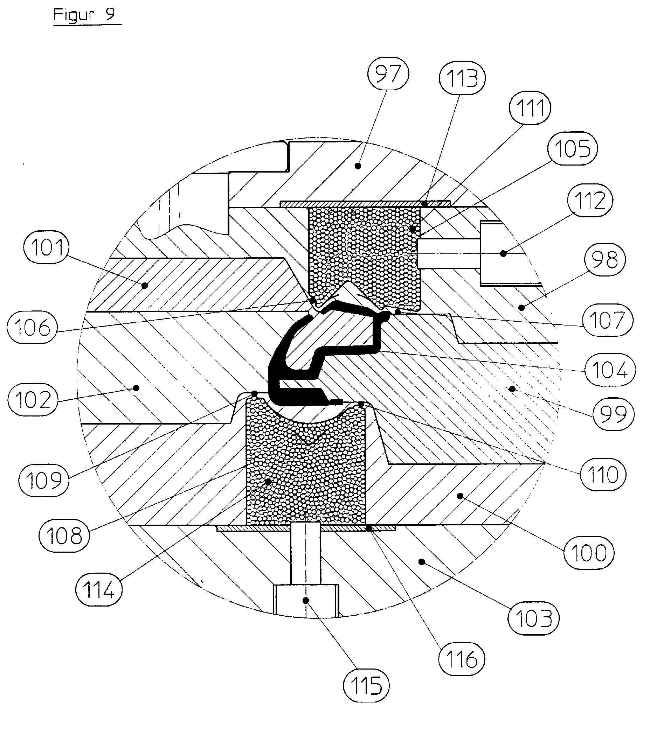

Das Beispiel gemäß Figur 9 zeigt ein Spritzgußwerkzeug mit Trägerplatten 97 bzw. 103 und mehreren Einsätzen 98, 99, 100, 101 und 102, die den Formhohlraum 104 für den Spritzling definieren. Der Einsatz 98 weist einen Hohlraum 105 auf, welcher mit Kugelkörpern 111 gefüllt ist, auf die mittels eines Druckzylinders 112 Druck ausgeübt werden kann. Es sind jeweils flexible Dichtzonen 106,107 vorgesehen, welche an den Einsatz 99 bzw. 101 angrenzen und die Trennfuge abdichten. Der Einsatz 100 weist ebenfalls einen Hohlraum 108 auf, welcher mit Kugelkörpern 114 gefüllt ist. Auch hier können die Kugelkörper 114 mittels eines Druckzylinders 115 mit Druck beaufschlagt werden. Um die Oberflächen der Trägerplatten 97 und 103 gegen das Druckmedium zu schützen, sind gehärtete Platten 113 bzw. 116 vorgesehen.

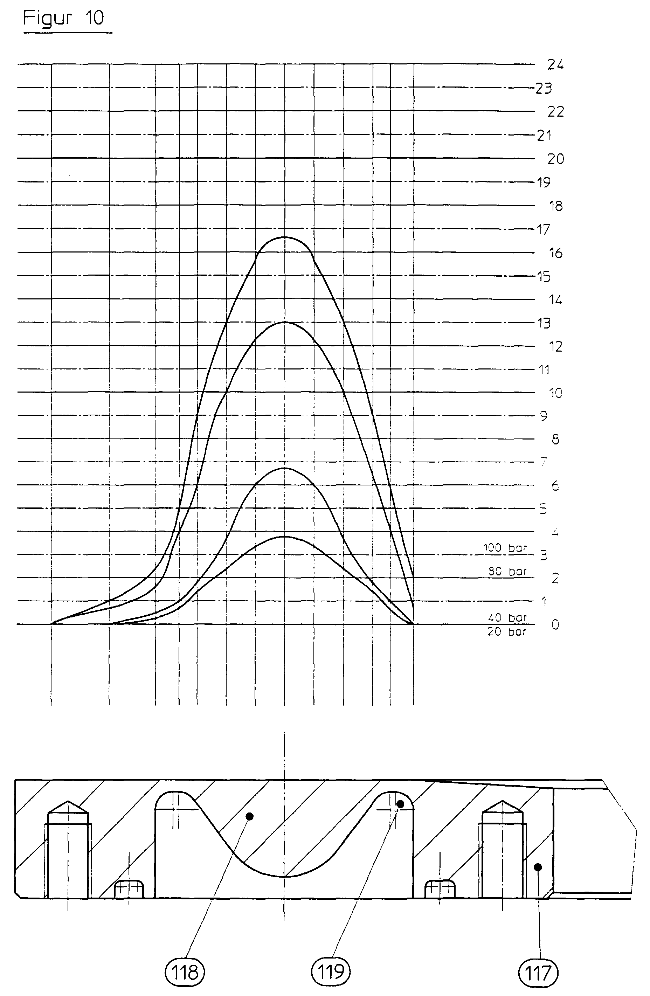

Figur 10 zeigt nun beispielhaft eine Möglichkeit der Ausbildung der flexiblen Dichtzone. Es ist ein Einsatz 117 gezeigt, welcher die flexible Dichtzone 118 ausbildet. Hierbei sind am jeweiligen Rand der flexiblen Dichtzone 118 Sollknickstellen 119 vorgesehen. Diese bewirken, daß der auf die flexible Dichtzone ausgewirkte Druck relativ sanft zur Mitte der flexiblen Dichtzone hin ansteigt.

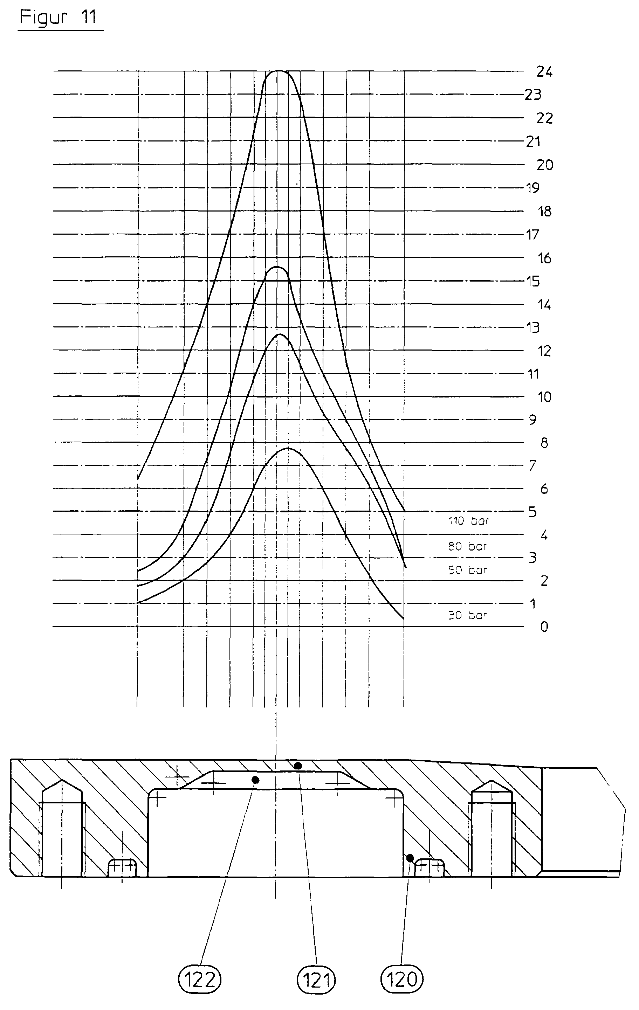

Figur 11 zeigt einen Einsatz 120 mit einer anderweitig ausgebildeten flexiblen Dichtzone 121, welche im mittleren Bereich eine Schwächung 122 aufweist. Im Gegensatz zur Ausführung gemäß Figur 10 ist hier eine relativ starke Druckkonzentration im Bereich der Mitte der flexiblen Dichtzone 121 zu beobachten.

### Zeichnungslegende

- 1: Spritzgußwerkzeug
- 2: Oberform
- 3: Unterform
- 4: Spritzling
- 5: Einsatz
- 6: Schraube
- 7: Dichtung
- 8: Hohlraum
- 9: Zuleitung
- 10: flexible Dichtzone
- 11: Werkstück
- 12: Trennebene
- 13: Einsatz
- 14: Einsatz
- 15: Hohlraum
- 16: Dichtung
- 17: Zuleitung
- 18: flexible Dichtzone
- 19: Trennfläche
- 20: Schraube
- 21: Hohlraum
- 22: Kugeln
- 23: Einsatz
- 24: Platte
- 25: Hydraulikeinheit
- 26: Hohlraum
- 27: Kugeln
- 28: Einsatz
- 29: Platte
- 30: Hydraulikeinheit
- 31: flexible Dichtzone
- 32: flexible Dichtzone
- 33: Spritzling
- 34: Einspritzdüse
- 35: Hohlraum
- 36: Platte
- 37: Dichtung
- 38: Zuleitung
- 39: flexible Dichtzone
- 40: Einsatz
- 41: Hohlraum
- 42: Platte
- 43: Zuleitung
- 44: Dichtung
- 45: flexible Dichtzone
- 46: flexible Dichtzone
- 47: Einsatz
- 48: Einsatz
- 49: Presstift
- 50: Trägerplatte
- 51: Trägerplatte
- 52: Formplatte
- 53: Formplatte
- 54: Auswerfereinheit
- 55: Druckzylinder
- 56: Presstift
- 57: Hohlraum
- 58: Kugeln
- 59: Spritzling
- 60: flexible Dichtzone
- 61: Trennebene
- 62: Oberform
- 63: Unterform
- 64: Trägerplatte
- 65: Hohlraum
- 66: flexible Dichtzone
- 67: Formhohlraum
- 68: Einsatz
- 69: Einsatz
- 70: Einsatz
- 71: Hohlraum
- 72: flexible Dichtzone
- 73: Kugeln
- 74: Druckzylinder
- 75: Kugeln
- 76: Druckzylinder
- 77: Platte
- 78: Platte
- 79: Federpaket
- 80: Federpaket
- 81: Trägerplatte
- 82: Einsatz
- 83: Einsatz
- 84: Einsatz
- 85: Einsatz
- 86: Trägerplatte
- 87: Hohlraum
- 88: flexible Dichtzone
- 89: Hohlraum
- 90: flexible Dichtzone
- 91: Zuleitung
- 92: Formhohlraum
- 93: Hohlraum
- 94: Zuleitung
- 95: flexible Dichtzone
- 96: flexible Dichtzone
- 97: Trägerplatte
- 98: Einsatz
- 99: Einsatz
- 100: Einsatz
- 101: Einsatz
- 102: Einsatz
- 103: Trägerplatte
- 104: Formhohlraum
- 105: Hohlraum
- 106: flexible Dichtzone
- 107: flexible Dichtzone
- 108: Hohlraum
- 109: flexible Dichtzone
- 110: flexible Dichtzone
- 111: Kugeln
- 112: Hydraulikzylinder
- 113: Platte
- 114: Kugeln
- 115: Hydraulikzylinder
- 116: Platte
- 117: Einsatz
- 118: flexible Dichtzone
- 119: Sollknickstelle
- 120: Einsatz
- 121: flexible Dichtzone
- 122: Schwächung

## Patentansprüche

1. Spritzgußwerkzeug mit mindestens zwei Formhälften und/oder Formeinsätzen, die durch eine von außen wirkende Kraft geschlossen werden können, **dadurch gekennzeichnet,** daß im Spritzgußwerkzeug oder Teilen davon mindestens ein Hohlraum (8; 15) angeordnet ist, der mittels eines geeigneten Mediums unter Druck gesetzt werden kann, daß mindestens ein Teil der den Hohlraum (8; 15;) begrenzenden Wand als flexible Dichtzone (10;18) ausgebildet ist, über welche der Druck direkt oder indirekt auf eine Kontur oder Trennung der Formeinsätze (13) oder auf ein Werkstück (11) übertragen wird.

2. Spritzgußwerkzeug nach Anspruch 1, **dadurch gekennzeichnet,** daß der Hohlraum in einer Formhälfte (3) und/oder einem Form- oder Kontureinsatz (15) des Spritzgußwerkzeugs angeordnet ist.

3. Spritzgußwerkzeug nach einem der Ansprüche 1 oder 2, **dadurch gekennzeichnet,** daß die flexible Dichtzone (10; 18) annähernd parallel zur Kontur oder zur Trennung (13) der Formeinsätze verläuft.

4. Spritzgußwerkzeug nach einem der Ansprüche 1 bis 3, **dadurch gekennzeichnet,** daß die Wandstärke der flexiblen Dichtzone (10; 18) variiert.

5. Spritzgußwerkzeug nach einem der Ansprüche 1 bis 4, **dadurch gekennzeichnet,** daß die flexible Dichtzone (10; 18) Schwachstellen oder Sollknickstellen aufweist.

6. Spritzgußwerkzeug nach einem der Ansprüche 1 bis 5, **dadurch gekennzeichnet,** daß der Hohlraum (41) mehrere flexible Dichtzonen (45; 46) aufweist.

7. Spritzgußwerkzeug nach einem der Ansprüche 1 bis 6, **dadurch gekennzeichnet,** daß der Hohlraum (8; 15; 41) erst unter Druck gesetzt wird, nachdem die Formhälften (2; 3) des Spritzgußwerkzeuges geschlossen sind.

8. Spritzgußwerkzeug nach einem der Ansprüche 1 bis 7, **dadurch gekennzeichnet,** daß das Druckmedium ein Hydraulikmedium ist.

9. Spritzgußwerkzeug nach einem der Ansprüche 1 bis 8, **dadurch gekennzeichnet,** daß das Druckmedium aus kugelförmigen Festkörpern (22; 27) besteht.

10. Spritzgußwerkzeug nach einem der Ansprüche 1 bis 9, **dadurch gekennzeichnet,** daß die kugelförmigen Festkörper (22; 27) aus Metall, Glas oder Keramik bestehen.

11. Spritzgußwerkzeug nach einem der Ansprüche 1 bis 10, **dadurch gekennzeichnet,** daß die den Hohlraum (8; 15; 41) begrenzenden Oberflächen (24) zumindest teilweise gehärtet sind.

12. Spritzgußwerkzeug nach einem der Ansprüche 1 bis 11, **dadurch gekennzeichnet,** daß das Druckmedium hydraulisch, manuell oder elektromechanisch mit Druck beaufschlagt wird.

13. Spritzgußwerkzeug nach einem der Ansprüche 1 bis 12**, dadurch gekennzeichnet,** daß der Druck im Druckmedium mittels eines geeigneten Drucksensors gemessen wird.
